# EUROPÄISCHE PATENTSCHRIFT

(11) **EP 2 317 410 B1**
(45) Veröffentlichungstag und Bekanntmachung des Hinweises auf die Patenterteilung: **04.01.2012**
(21) Anmeldenummer: 10187275.2
(22) Anmeldetag: 12.10.2010
(51) Int. Cl.: G05B 19/05

(54) **Sicherheitssteuerung**
Safety control
Commande de sécurité

(30) Priorität: 23.10.2009 EP 09173908
(43) Veröffentlichungstag der Anmeldung: 04.05.2011
(73) Patentinhaber: SICK AG, 79183 Waldkirch (DE)
(72) Erfinder: Weddingfeld, Klaus, 79183 Waldkirch (DE); Koepcke, Oliver, 79395 Neuenburg (DE)
(74) Vertreter: Hehl, Ulrich

(56) Entgegenhaltungen:
- EP-A1- 1 936 457
- EP-A2- 1 493 960
- EP-A2- 1 496 411
- WO-A1-2006/069691
- DE-A1- 19 750 470

## Beschreibung

Die Erfindung betrifft eine Sicherheitssteuerung mit einer Kommunikationsschnittstelle für den Anschluss einer nachgeordneten weiteren Sicherheitssteuerung und einer vorgeordneten weiteren Sicherheitssteuerung in Linienanordnung nach dem Oberbegriff von Anspruch 1 sowie ein Verfahren zum Aufbau oder Verändern einer Linienanordnung von Sicherheitssteuerungen nach dem Oberbegriff von Anspruch 13.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden. Die Programmierung der Sicherheitssteuerung wird zwar durch professionelle grafische Programmieroberflächen unterstützt, erfordert aber vor allem deshalb vertiefte Kenntnisse, weil jeder Fehler in der Sicherheitssteuerung zu einer Gefährdung von Personen führt. Die Norm IEC 61131 zur Programmierung von Steuerungssystemen beschreibt in IEC 61131-3 die grafische Programmierung mittels Funktionsbausteinen sowie eine IO-Schnittstellenbeschreibung in physikalisch-technischen Werten in IEC 61131-2. Die Konfiguration der Eingangs- und Ausgangsbeschaltung und deren Schnittstellen zu Sensoren und Aktoren allerdings ist nicht standardisiert.

Die in der Praxis eingesetzten Maschinenkonzepte werden zunehmend modular und erlauben eine Vielzahl von Optionen. Modularität bedeutet einerseits, dass die Sicherheitssteuerung selbst modular erweiterbar ist, um an Veränderungen und Ergänzungen in der angeschlossenen Sensorik oder Aktorik angepasst zu werden. Andererseits werden auch mehrere Sicherheitssteuerungen in einem Netzwerk miteinander verbunden. Das ist beispielsweise dann sinnvoll, wenn jeweils eine Sicherheitssteuerung für eine Maschine oder ein Anlagenteil verantwortlich ist. In vielen Anwendungen, beispielsweise in Prozessketten, bei denen Maschinen nacheinander Verarbeitungsschritte an dem jeweiligen Zwischenprodukt der vorigen Maschine vollziehen, genügt eine sehr einfache Netzwerktopologie der Sicherheitssteuerungen in Form einer Linienanordnung.

In derart vernetzten Sicherheitssteuerungen ist zwar ein Großteil der Steuerungsfunktionalität jeweils lokal auf die zugehörige Maschine bezogen. Zugleich gibt es Signale, beispielsweise ein Notaus, welche die Sicherheitssteuerungen untereinander kommunizieren müssen. Früher wurden zu diesem Zweck die Notausschalter an den einzelnen Maschinen in einer Reihenschaltung verbunden. Dann führt das Auslösen eines Nothalts an irgend einer der Maschinen sofort zum Stillstand der ganzen Anlage. Bei Erweiterungen der Anlage wurden dann einfach zusätzliche Notausschalter in der Reihenschaltung angefügt.

Bei den gängigen heutigen Sicherheitssteuerungskonzepten ist eine derart einfache Veränderung der Anlage nicht mehr möglich. Die Sicherheitssteuerungen kommunizieren üblicherweise über Prozessabbilder, in denen für jede überwachte Maschine beziehungsweise deren Sicherheitssteuerung jeweils ein Bitblock beziehungsweise Datenbereich reserviert wird. Wird der Aufbau der Anlage verändert, indem Maschinen hinzugefügt, entfernt oder ausgetauscht werden, so sind die an das bestehende Prozessabbild angepassten Steuerungsprogramme der in dem Netzwerk verbundenen Sicherheitssteuerungen nicht mehr gültig, und es bedarf einer Umprogrammierung und anschließenden erneuten Inbetriebnahme, die nur entsprechend ausgebildetes Personal leisten kann. Würde man ohne Umprogrammierung eine Sicherheitssteuerung zu dem Netzwerk hinzufügen, daraus entfernen oder Sicherheitsteuerungen umordnen, so gilt das Netzwerk als gestört, so dass es die Freigabe für den Betrieb aus sicherheitstechnischen Gründen verweigert.

Ein weiterer großer Nachteil der bestehenden Lösungen liegt darin, dass in dem Prozessabbild für jede zusätzliche Sicherheitssteuerung ein weiterer Datenbereich reserviert werden muss. Um in dem Beispiel eines Notausschalters zu bleiben, muss für jede Maschine jeweils ein Bitbereich beziehungsweise Datenbereich für deren Notausschalter zur Verfügung stehen. Jede Anlagenerweiterung erfordert demnach zusätzliche Bits des Prozessbildes. Da aber die Bitbreite des Prozessabbildes eine äußerst knappe Ressource darstellt, sind Erweiterungen auf diesem Weg nur sehr begrenzt möglich.

Obwohl also die Sicherheitssteuerung in derartigen modularen Anlagen weitgehend autark arbeiten könnte, ist herkömmlich wegen der Abhängigkeiten in der gesamten Anlage eine Anpassung der Steuerungsprogramme der Sicherheitssteuerungen erforderlich, wenn die Anlage beispielsweise durch Umordnen, Hinzufügen oder Herausnehmen von Anlagenteilen verändert wird. Das ist nicht nur ein enormer Aufwand, es erfordert auch eine qualifizierte und damit fehleranfällige Programmierung oder zumindest Auswahl der in der konkreten Anwendung benötigten Steuerungsprogramme durch einen Steuerungsexperten. Die herkömmlichen Lösungen sind damit ebenso zeit- und kostenaufwändig wie unflexibel.

Die EP 1 496 411 A2 offenbart eine Sicherheitssteuerung, bei der einfache Einheiten und fortgeschrittene Einheiten miteinander verbunden werden. An die fortgeschrittenen Einheiten können Erweiterungseinheiten angeschlossen werden. Die fortgeschrittenen Einheiten sind in der Lage, Eingangssignale von Sensoren, von einer einfachen Einheit oder einer vorgeordneten fortgeschrittenen Einheit zu verarbeiten und daraus ein Ausgangssignal für eine nachgeordnete fortgeschrittene Einheit sowie für eine überwachte Maschine zu erzeugen.

Die EP 1 936 457 A1 offenbart eine modulare Sicherheitsschaltvorrichtung, bei der mindestens ein Ausgangsmodul vorgesehen ist, welches eine eigene Logik aufweist. In einer Ausführungsform können mehrere derartige Ausgangsmodule zur verteilten oder redundanten Auswertung Zwischenergebnisse der Auswertung untereinander oder mit einer zentralen Steuerung der Sicherheitsschaltvorrichtung austauschen. Damit wird aber nicht der Nachteil überwunden, dass Veränderungen der intelligenten Austauschmodule das Steuerungsprogramm angepasst werden muss. Auch bietet diese herkömmliche Lösung keinen Ansatz, um das Problem eines begrenzten Prozessabbilds zu lösen.

Aus der EP 1 493 960 A2 ist ein Sicherheitsrelaissystem bekannt, welches Abschnitte für die Verarbeitung von sicheren und unsicheren Informationen enthält. Dabei können an einen Kopf des Systems mehrere Eingangseinheiten und Ausgangseinheiten angeschlossen werden.
In der WO2007/110953 A1 wird eine Programmieroberfläche für eine Steuerung vorgestellt, welche mehrere Stationen enthält. Diese Stationen sind über ein Feldprotokoll untereinander vernetzt.

Die US 6,549,034 B1 beschreibt eine programmierbare Sicherheitssteuerung mit reduzierten Kreuzverbindungen.

Daher ist Aufgabe der Erfindung, eine einfache und sichere Möglichkeit zu schaffen, eine vernetzte Sicherheitssteuerung an Veränderungen in der Anlage anzupassen.

Diese Aufgabe wird durch eine Sicherheitssteuerung gemäß Anspruch 1 und ein Verfahren zum Aufbau oder Verändern einer Linienanordnung von Sicherheitssteuerungen gemäß Anspruch 13 gelöst. Dabei geht die erfindungsgemäße Lösung von dem Grundgedanken aus, jede einzelne Sicherheitssteuerung in einem Netzwerk von Sicherheitssteuerungen eigenständig funktionsfähig auszugestalten und optional Reaktionen auf Vorgänger beziehungsweise Nachfolger in einer Linienanordnung mehrerer vernetzter Sicherheitssteuerungen einzubeziehen. Die Sicherheitssteuerungen in einer derart vernetzten Linie funktionieren unabhängig von der konkreten Reihenfolge, Art und Anzahl hintereinandergeschalteter Sicherheitsteuerungen. Die Sicherheitssteuerungen arbeiten autark, es gibt keine zentrale, übergeordnete Instanz, welche die Kommunikation und Logikauswertung bündelt oder koordiniert.

Sämtliche zu einer Linienanordnung verbindbaren Sicherheitssteuerungen kennen vorab und für sich das gemeinsame globale Prozessabbild. Dieses unveränderliche Prozessabbild wird demnach auch nicht bei Anpassungen der Anlage und der zugehörigen Sicherheitssteuerungen modifiziert. Jede einzelne Sicherheitssteuerung kann auf die in der Linienanordnung von Punkt zu Punkt kommunizierten gemeinsamen globalen Bits des Prozessabbilds zugreifen, sie verrechnen und verändert oder unverändert weitergeben. Dadurch entsteht eine einheitliche Bedeutung der Datenbereiche des Prozessabbildes.

Die Erfindung hat den Vorteil, dass Änderungen im Anlagenaufbau durch einfaches Umstecken möglich sind, die kein Expertenwissen erfordern, so dass auch keine qualifizierte Inbetriebnahme erfolgen muss. Damit entsteht eine hohe Flexibilität und eine sehr schnelle und einfache Möglichkeit, die Anlage einschließlich der weiterhin voll funktionsfähigen Sicherheitssteuerung zu verändern. Außerdem ist eine beliebig lange Linienanordnung möglich, ohne dass die erforderliche Prozessbildbreite zunimmt.

In einer Linienanordnung hat jede teilnehmende Sicherheitssteuerung genau einen Vorgänger und genau einen Nachfolger. Ausnahmen bilden die beiden Sicherheitssteuerungen am Anfang und Ende der Linienanordnung, an die kein Vorgänger beziehungsweise kein Nachfolger angeschlossen ist. Eine Ringstruktur ist erfindungsgemäß nicht vorgesehen, weil dabei Rückkopplungseffekte auftreten können. Die Sicherheitssteuerungen bilden damit kein Netzwerk im Sinne freier Kommunikation zwischen allen Teilnehmern. Die serielle Verbindung in der Linienanordnung lässt zunächst nur eine Punkt-zu-Punkt-Kommunikation zwischen Nachbarn zu. In zusätzlichen Kommunikationszyklen können aber Informationen auch von Nachbar zu Nachbar weitergegeben werden und damit die gesamte Linienanordnung erreichen.

Die steuerungsrelevanten Informationen sind bevorzugt zumindest Teile eines in der gesamten Linienanordnung gültigen, in der Sicherheitsteuerung unabhängig von der Linienanordnung vordefinierten Prozessabbilds der Sicherheitssteuerung. Da die erforderliche Bandbreite in der Praxis relativ gering ist, wird noch bevorzugter jeweils das gesamte Prozessabbild übertragen. In dem Prozessabbild können beispielsweise Zustände einiger oder aller Eingänge und/oder Ausgänge als Bitwerte repräsentiert sein. Es können auch Zwischenergebnisse der Logik als einfache Bitwerte abgebildet sein, beispielsweise um mehrkanalige Anschlüsse zusammenzufassen oder auch komplexere Auswertungen zu bündeln, unabhängig davon, wie komplex die Sensorik und die Logik ist, die zu diesem Ergebnis führt. Das Prozessabbild ist für die Anlagen definiert und unabhängig von der Anzahl der Stationen beziehungsweise beteiligten Sicherheitssteuerungen, welche die Linienanordnung bilden. Jede Information in diesem Prozessabbild entspricht einer definierten Funktion. Darüber besteht in allen beteiligten Sicherheitssteuerungen bereits vorab vor Zusammenschluss zu einer Linienanordnung Einigkeit.

Die austauschbaren steuerungsrelevanten Informationen betreffen vorzugsweise Sicherheitspfade, insbesondere Notaussignale oder Wiederanlaufsignale. In einem herkömmlichen Verbund von Sicherheitssteuerungen müsste für eine derartige sicherheitsrelevante Funktion ein Datenbereich beziehungsweise Bitbereich je Sicherheitssteuerung bereitgestellt sein. Erfindungsgemäß genügt ein einziger Bitbereich beziehungsweise sogar nur ein Bit, um die Funktion für eine beliebige Anzahl beteiligter Sicherheitssteuerungen zu realisieren.

Die Sicherheitssteuerung weist bevorzugt einen Speicher auf, in dem Werte für die steuerungsrelevanten Informationen abgelegt sind, insbesondere Werte zumindest für Teile des vordefinierten Prozessabbilds, wobei die Steuerungseinheit dafür ausgebildet ist, die vordefinierten Informationen als die steuerungsrelevanten Informationen eines nicht angeschlossenen Vorgängers und/oder Nachfolgers zu verwenden. Dieses vorbelegte Default-Prozessabbild wird von den Sicherheitssteuerungen am Anfang und Ende der Linienanordnung verwendet, wo es keinen Vorgänger beziehungsweise keinen Nachfolger gibt. Die Vorgabewerte entsprechen vorteilhafterweise Zuständen ungestörten Betriebs, so dass die Sicherheitssteuerungen an den Enden der Linienanordnung effektiv so arbeiten, als seien beide Nachbarn vorhanden. Die Logik in allen Sicherheitssteuerungen kann dank der Vorgabewerte auf eine Fallunterscheidung für die Position innerhalb der Linienanordnung verzichten. Ist weder ein Nachfolger noch ein Vorgänger angeschlossen, so ist die betreffende Sicherheitssteuerung zwar nicht mehr in ein Netzwerk eingebunden, sondern völlig isoliert und autark. Wegen der Vorgabewerte arbeitet sie aber auch in dieser Konfiguration sinnvoll.

Das Steuerungsprogramm weist bevorzugt jeweils einen Satz von Logikregeln auf, um steuerungsrelevante Informationen für die gesamte Linienanordnung zu erzeugen, zu verarbeiten und weiterzuleiten. Das heißt nicht, dass die Information unmittelbar dem gesamten Netzwerk kommuniziert wird, sondern dass sie Schritt für Schritt durch die Linienanordnung weitergereicht wird. So erreichen für die gesamte Anlage relevante Informationen, beispielsweise ein Nothalt oder ein Neustart, sämtliche Sicherheitssteuerungen. Durch die Vorgabe von Logikregeln muss bei der Programmierung der Sicherheitssteuerung nicht überlegt werden, wie Nachrichten korrekt sowohl intern verarbeitet als auch kommuniziert werden.

Das Steuerungsprogramm weist bevorzugt jeweils einen Satz von Logikregeln auf, um steuerungsrelevante Informationen für den Nachfolger und/oder den Vorgänger zu erzeugen, zu verarbeiten und weiterzuleiten. Derartige Informationen müssen nicht der gesamten Anlage kommuniziert werden, sondern betreffen nur einen oder beide unmittelbaren Nachbarn.

Das Steuerungsprogramm weist bevorzugt jeweils einen Satz von Logikregeln für Bits der steuerungsrelevanten Informationen auf, die normal und invertiert codiert sind. Normale Codierung bedeutet wie meist in der Digitaltechnik, dass eine strom- beziehungsweise spannungslose Leitung für eine logische Null und eine mit Strom beziehungsweise Spannung beaufschlagte Leitung für eine logische Eins steht ("Default Low"). Bei invertierter Codierung ist es genau umgekehrt ("Default High"). Diese Codierung wird in der Sicherheitstechnik häufig verwendet, beispielsweise für den Anschluss eines Nothalts, weil bei normaler Codierung die Übertragung einer logischen Null nicht von einem Leitungsdefekt unterscheidbar wäre. Nicht sicherheitskritische Signale, etwa ein Restart, werden dagegen auch normal codiert.

Die Kommunikationsschnittstelle ist bevorzugt für eine sichere Kommunikation ausgebildet. Die steuerungsrelevanten Informationen, die über die Kommunikationsschnittstelle ausgetauscht werden, sind im Allgemeinen in die Logikregeln der Sicherheitssteuerung eingebunden und damit sicherheitskritisch. Eine Möglichkeit für eine sichere Kommunikation ist die Verwendung eines bekannten Busstandards, wie CAN oder Profibus, der durch ein zusätzliches Sicherheitsprotokoll oder durch redundante, zusätzliche Leitungen sicher weitergebildet wird.

Die Sicherheitssteuerung ist bevorzugt modular aufgebaut und weist mindestens ein Anschlussmodul mit den Eingängen und/oder den Ausgängen auf, wobei ein erstes Anschlussmodul an die Steuerungseinheit und die weiteren Anschlussmodule an jeweils nur ein vorgeordnetes Anschlussmodul angeschlossen sind, so dass die Steuerungseinheit mit den Anschlussmodulen eine Modulreihe bildet. Der modulare Aufbau der einzelnen Sicherheitsteuerung ermöglicht flexible Anpassungen in der Sensorik und Aktorik derjenigen Maschine oder desjenigen Anlagenteils, der von der Sicherheitssteuerung überwacht wird.

Vorteilhafterweise bildet die Steuerungseinheit ein Steuerungsmodul und sowohl Anschlussmodule als auch Steuerungsmodul sind in jeweils einem Gehäuse mit untereinander in zumindest einigen Dimensionen identischer Außengeometrie untergebracht, wobei jedes Anschlussmodul eine Verbindung für ein vorgeordnetes Modul und eine Verbindung für ein nachgeordnetes Modul der Modulreihe aufweist. So lassen sich Modulreihen übersichtlich und mit planbarem Platzbedarf aufbauen. Die Außengeometrie des Steuerungsmoduls kann gezielt von derjenigen der Anschlussmodule abweichen, um sie besser sichtbar zu machen und um Raum für den erhöhten Bedarf an Elektronik zu schaffen. Diese Abweichung muss aber nicht alle Dimensionen betreffen, so dass beispielsweise das Steuerungsmodul gegenüber den Anschlussmodulen dieselbe Breite und Tiefe, aber eine abweichende Höhe hat.

In bevorzugter Weiterbildung ist eine Linienanordnung mit mehreren erfindungsgemäßen Sicherheitssteuerungen vorgesehen, wobei jede Sicherheitssteuerung der Linienanordnung über die Kommunikationsschnittstelle mit ihrem Vorgänger und mit ihrem Nachfolger verbunden ist. Die Linienanordnung ist damit doppelt verkettet und lässt Kommunikation von vorne nach hinten wie von hinten nach vorne zu. Bei einfacher Verkettung können die fehlenden Eingänge an den Enden der Linienanordnung zu fehlerhaftem Verhalten führen, so dass es beispielsweise nicht möglich ist, eine Anlage nach einem Notaus wieder freizugeben und anfahren zu lassen. Selbstverständlich sind die beiden Sicherheitssteuerungen an den Enden der Linienanordnung von der Bedingung ausgenommen, dass sie sowohl einen Vorgänger als auch einen Nachfolger haben. Wegen des jeweils fehlenden Vorgängers oder Nachfolgers wird die Kommunikationsleitung elektrisch abgeschlossen.

Die Steuerungseinheiten der Sicherheitssteuerungen sind bevorzugt dafür ausgebildet, ein Teach-Broadcast-Signal zu verarbeiten, so dass die Sicherheitssteuerungen sich bei Aktivierung der Linienanordnung miteinander bekannt machen, Adressen vergeben und feststellen, ob jeweils ein Vorgänger und/oder ein Nachfolger angeschlossen ist. Ein Teach-Broadcast, also eine Einlernnachricht an alle Teilnehmer, initiiert somit den Netzwerkaufbau. Findet eine Sicherheitssteuerung keinen Vorgänger, so erkennt sie sich als Anfang der Linienanordnung und entsprechend als Ende der Linienanordnung, wenn kein Nachfolger erkannt wird. Diese Sicherheitssteuerungen verwenden vorteilhafterweise für die fehlende Kommunikation von den nicht angeschlossenen Sicherheitssteuerungen vordefinierte Informationen.

Die Steuerungsprogramme der einzelnen Sicherheitssteuerungen der Anordnung untereinander vergleichen bevorzugt, insbesondere bei Aktivierung der Sicherheitssteuerung, ob alle Sicherheitssteuerungen der Linienanordnung sich über die Bedeutung der austauschbaren steuerungsrelevanten Informationen einig sind, insbesondere auf dasselbe vordefinierte Prozessabbild synchronisiert sind und/oder in allen Sicherheitssteuerungen dieselben vordefinierten Informationen gespeichert sind. Unter Aktivieren ist hier das Einschalten beziehungsweise Hochfahren der Anlage zu verstehen. Eine Inbetriebnahme ist eine besondere Aktivierung, bei der eine neue oder veränderte Anlage erstmals eingeschaltet wird. Eine Inbetriebnahme erfordert meist besonders qualifiziertes Personal und ist erfindungsgemäß nicht zwingend erforderlich, wenn sich die Netzwerkkonfiguration der Sicherheitssteuerungen verändert. Bei Aktivieren soll nach dieser Ausführungsform geprüft werden, ob die Sicherheitssteuerungen in der konkret realisierten Linienanordnung sinnvoll zusammenarbeiten werden. Dazu gehört Einigkeit über das verwendete globale Prozessabbild und die Vorgabewerte zur Verwendung an den Enden der Linienanordnung. Der Vergleich erfolgt beispielsweise anhand einer Verbund-Identifikationsnummer, die codiert oder festlegt, ob alle verbundenen Sicherheitssteuerungen überhaupt für eine Linienanordnung geeignet sind und welches globale Prozessabbild beziehungsweise welche Vorgabewerte sie verwenden.

Die Steuerungsprogramme der einzelnen Sicherheitssteuerungen der Anordnung untereinander vergleichen bevorzugt, insbesondere bei Aktivierung der Sicherheitssteuerung, ob die als Vorgänger und/oder Nachfolger angeschlossenen Sicherheitssteuerungen der Linienanordnung gespeicherten Sicherheitssteuerungen entsprechen. Auch wenn erfindungsgemäß Veränderungen in der Anordnung der Sicherheitssteuerungen unterstützt werden, darf dies nicht wahllos und zu beliebigen Zeiten geschehen. Ein Austausch während des laufenden Betriebs würde in einer sicherheitstechnischen Anwendung als Ausfall gewertet und zu einer sicherheitsgerichteten Reaktion führen. Aber auch bei der Aktivierung muss erkannt werden, ob die veränderte Netzwerkkonfiguration gewollt oder beispielsweise das Ergebnis eines Defekts oder einer versehentlichen Trennung von Verbindungsleitungen ist. Deshalb speichert jede Steuerungseinheit, insbesondere nach einem Teach-Broadcast, welcher Vorgänger und welcher Nachfolger zuletzt angeschlossen war, beispielsweise anhand einer Typ-Identifikationsnummer oder einer individuellen Sicherheits-Identifikationsnummer. Eine demgegenüber veränderte Netzwerkkonfiguration führt entweder unmittelbar zur Verweigerung der Freigabe der Anlage, oder es wird eine entsprechend zu autorisierende Zustimmung einer qualifizierten Bedienperson gefordert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben. Nach dem erfindungsgemäßen Verfahren können Sicherheitssteuerungen in einer gewünschten Reihenfolge linienförmig zusammengeschlossen, in ihrer Reihenfolge verändert und/oder Sicherheitssteuerungen entfernt oder hinzugefügt werden. So lässt sich die vernetzte Anordnung von Sicherheitssteuerungen flexibel an eine Anlagenstruktur anpassen.

Die Steuerungsprogramme in den Sicherheitssteuerungen der Linienanordnung verwenden bevorzugt ein in den Sicherheitssteuerungen (10a-e) festgelegtes, einheitliches globales Prozessabbild, und in jeder Sicherheitssteuerung werden Werte für das Prozessabbild gespeichert, welche die Steuerungseinheit verwendet, wenn die Sicherheitssteuerung an einem Ende der Linienanordnung ohne Vorgänger oder ohne Nachfolger angeschlossen wird. Das einheitliche Prozessabbild legt unter anderem die Bitzahl an Prozessdaten und die globale, schon vor dem Zusammenschlusse zu einer Linienanordnung in jeder Sicherheitssteuerung bekannte Bedeutung der einzelnen Bits fest, wie sie einheitlich in allen in der Linienanordnung verbindbaren Sicherheitssteuerungen verstanden werden. Das globale Prozessabbild betrifft anlagenweite, die einzelne Sicherheitssteuerung übergreifende sicherheitsrelevante Funktionen wie einen Nothalt oder einen Wiederanlauf. Die konkrete Verrechnung innerhalb einer Sicherheitssteuerung hat lokale Bedeutung für den von der Sicherheitssteuerung überwachten Anlagenteil und wird individuell projektiert. Von der lokalen Verrechnung hängt aber auch die Art und Weise ab, in der Werte für das Prozessabbild in der Linienanordnung kommuniziert werden. Damit können die Sicherheitssteuerungen in beliebiger Anordnung innerhalb einer Linie zusammenarbeiten.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer erfindungsgemäßen Sicherheitssteuerung zum Anschluss in einer Linienanordnung;
- Fig. 2: eine Schemadarstellung der Steuerungslogik in der Sicherheitssteuerung gemäß Figur 1;
- Fig. 3: eine Blockdarstellung mehrerer Sicherheitssteuerungen gemäß Figur 1 zu einer Linienanordnung;
- Fig. 4: eine Blockdarstellung mehrerer Sicherheitssteuerungen gemäß Figur 1 vor der Verbindung zu einer Linienanordnung;
- Fig. 5: eine erste beispielhafte Verkettung der Sicherheitssteuerungen gemäß Figur 4 zu einer Linienanordnung nach einem Teach-Broadcast;
- Fig. 6: eine zweite beispielhafte Verkettung der Sicherheitssteuerungen gemäß Figur 4 zu einer Linienanordnung nach einem Teach-Broadcast;
- Fig. 7a-f: ein beispielhafter Signalverlauf bei einer globalen Nachricht;
- Fig. 8a: eine Schemadarstellung einer Nachricht an einen Nachfolger;
- Fig. 8b: eine Schemadarstellung einer Nachricht an einen Vorgänger;
- Fig. 8c: eine Schemadarstellung einer Nachricht an beide Nachbarn;
- Fig. 8d: eine Schemadarstellung einer Nachricht an die gesamte Linienanordnung;
- Fig. 9a: eine grafische Repräsentation der Logikregeln für die Verarbeitung einer Nachricht an einen Nachfolger gemäß Figur 8a;
- Fig. 9b: eine grafische Repräsentation der Logikregeln für die Verarbeitung einer Nachricht an einen Vorgänger gemäß Figur 8b;
- Fig. 9c1: eine grafische Repräsentation der Logikregeln für die Verarbeitung einer Nachricht an beide Nachbarn gemäß Figur 8c bei invertierter Codierung;

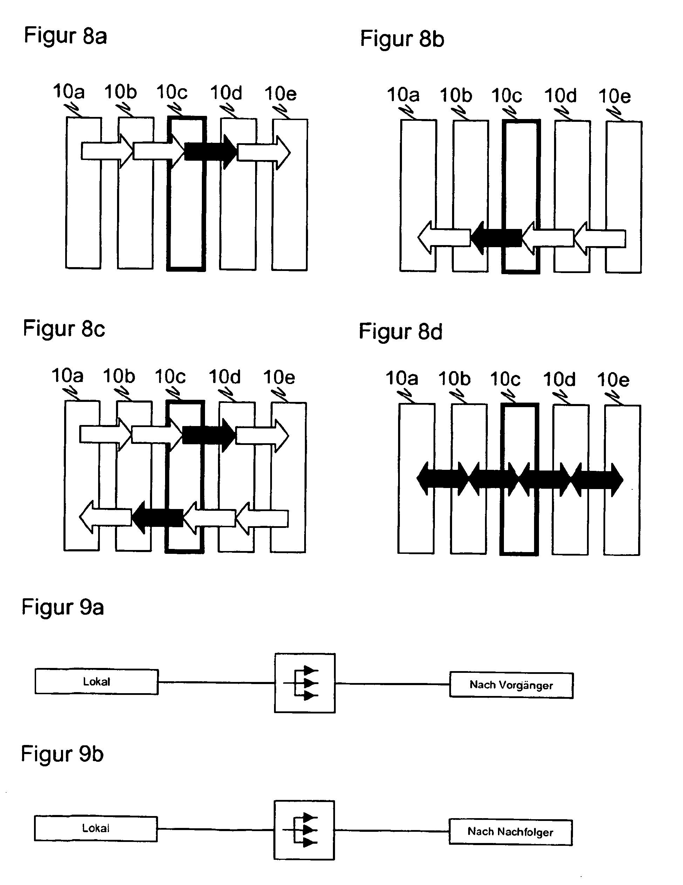

- Fig. 9c2: eine grafische Repräsentation der Logikregeln für die Verarbeitung einer Nachricht an beide Nachbarn gemäß Figur 8c bei normaler Codierung;
- Fig. 9d1: eine grafische Repräsentation der Logikregeln für die Verarbeitung einer Nachricht an die gesamte Linienanordnung gemäß Figur 8d bei invertierter Codierung;
- Fig. 9d2: eine grafische Repräsentation der Logikregeln für die Verarbeitung einer Nachricht an die gesamte Linienanordnung gemäß Figur 8d bei normaler Codierung;
- Fig. 10: eine Übersichtsdarstellung einer beispielhaften Anlage mit Sensoren und Aktoren und ihren Anschlüssen an eine modulare Sicherheitssteuerung.

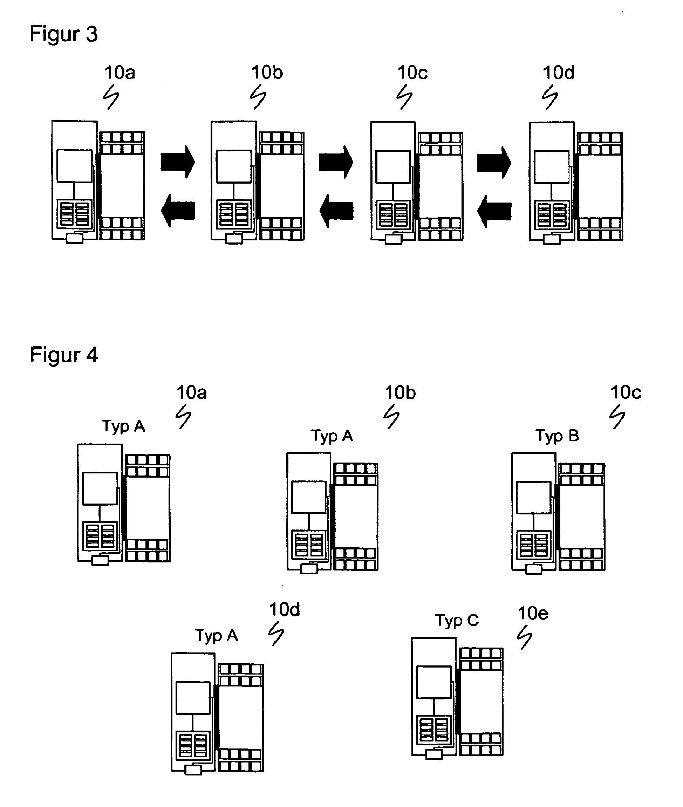

Figur 10 zeigt eine modulare Sicherheitssteuerung 10 mit einem Steuerungsmodul 12, welches eine sichere Steuerungseinheit 14 aufweist, also beispielsweise einen Mikroprozessor oder einen anderen Logikbaustein. In dem Steuerungsmodul 12 ist ein Speicherbereich 15 vorgesehen, in dem ein oder mehrere vordefinierte Prozessabbilder abgelegt sind und auf den die Steuerungseinheit 14 zugreifen kann, wie weiter unten im Zusammenhang mit den Figuren 3 bis 6 näher erläutert.

Mit dem Steuerungsmodul 12 sind sequentiell vier Anschlussmodule 16a-d verbunden. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten. Schließlich sind die Module 12, 16a-d vereinfacht dargestellt und können weitere Elemente aufweisen, beispielsweise je eine LED für jeden Anschluss in übersichtlicher, die Zugehörigkeit optisch hervorhebender Anordnung.

Die Sicherheitssteuerung 10 hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalters 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

An Ausgänge 22 sind bevorzugt zweikanalig ein Roboter 24a und eine Abkantpresse 24b angeschlossen, die Beispiele für Bedienpersonal bei unzulässigem Eingriff gefährdende Aktoren darstellen. Diese Aktoren 24a-b können somit von der Sicherheitssteuerung 10 einen Abschaltbefehl erhalten, um sie bei Erkennung einer Gefährdung oder eines unzulässigen Eingriffs durch Sicherheitssensoren 20a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die Steuerungseinheit 14, so dass eine solche Abbildung der Anlage zwar übersichtlicher, keineswegs aber erforderlich ist. Weitere als die dargestellten Aktoren 24a-b sind denkbar, und zwar sowohl solche, welche einen Gefahrenbereich erzeugen als auch andere, etwa eine Warnlampe, eine Sirene, eine Anzeige und dergleichen mehr.

Zwischen der Steuerungseinheit 14 und den Eingängen 18 bzw. den Ausgängen 22 besteht eine Backplane genannte serielle Kommunikationsverbindung 26, die insbesondere ein Rückwandbus ist und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung 28 auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 28 können auch Auswertungsaufgaben übernehmen oder gemeinsam mit der Steuerungseinheit 14 verteilte Auswertungen vornehmen, die von einfachen Bool'schen Verknüpfungen bis hin zu komplexen Auswertungen, etwa einer dreidimensionalen Sicherheitskamera, reichen können.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Konfiguration und Programmierung der Sicherheitssteuerung 10 erfolgt in der Praxis über eine grafische Benutzeroberfläche, mit deren Hilfe ein Steuerungsprogramm erstellt und anschließend aufgespielt wird.

Erfindungsgemäß ist vorgesehen, mehrere Sicherheitssteuerungen 10 der beschriebenen Art zu einer Linienanordnung zusammenzuschließen. Dazu weist das Steuerungsmodul 12 mindestens eine Schnittstelle 30 auf, über welche die Sicherheitssteuerungen 10 miteinander kommunizieren.

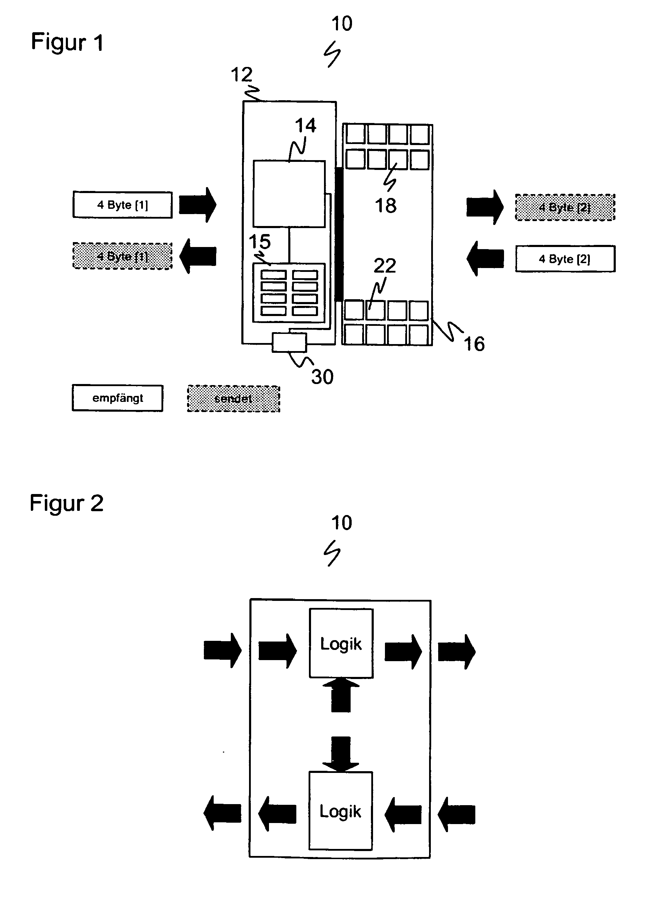

Figur 1 zeigt eine vereinfachte Blockdarstellung einer einzelnen Sicherheitssteuerung 10 zum Anschluss in einer Linienanordnung. Die Sicherheitssteuerung 10 ist prinzipiell so aufgebaut wie zu Figur 10 beschrieben. Die Anzahl von Anschlussmodulen 16, von Eingängen 18, von Ausgängen 22, die Art der angeschlossenen Sensoren 20 und Aktoren 24 sowie die Auswertungslogik ist rein beispielhaft und kann in jeder Sicherheitssteuerung 10 an die Anwendung angepasst variiert werden. In der praktischen Anwendung ist eine Sicherheitssteuerung 10 einem in sich abgeschlossenen Teil einer modularen Anlage zugeordnet, beispielsweise einer einzelnen Maschine, um diesen Teil sicherheitstechnisch zu überwachen. Eine Sicherheitssteuerung 10 wird in den Figuren oft vereinfacht mit nur einem Anschlussmodul 16 dargestellt, welches dann lediglich als Symbol für die genannte Variantenvielfalt dient.

Über die Schnittstelle 30 ist die Sicherheitssteuerung 10 in der Lage, Informationen an eine als Vorgänger und eine als Nachfolger angeschlossene weitere Sicherheitssteuerung zu senden und von dort zu empfangen. Dies ist in Figur 1 durch Pfeile mit Sendeund Empfangsinformationen dargestellt. Die Schnittstelle 30 ist vereinfacht als nur ein Anschluss gezeigt, der in der Praxis zweiteilig ausgebildet ist, um Vorgänger und Nachfolger anzuschließen, oder der eine entsprechend verdoppelte oder per Multiplexing angesteuerte Anzahl von Verbindungsleitungen aufweist.

Über die Schnittstelle 30 tauscht die Sicherheitssteuerung Steuerungsinformationen mit ihrem Vorgänger und ihrem Nachfolger aus. Im dargestellten Beispiel der Figur 1 handelt es sich dabei um jeweils 4 Byte Prozessdaten. Selbstverständlich sind abweichende Datenbreiten denkbar.

Figur 2 zeigt schematisch durch Pfeile den Logikfluss in der Sicherheitssteuerung 10. Die Sicherheitssteuerung 10 erhält auf dem oberen Pfad Signale von einem Vorgänger, die intern verrechnet und unverändert oder nach Verrechnung an den Nachfolger weitergegeben werden. Auf dem unteren Pfad geschieht dasselbe in umgekehrter Richtung. In Figur 3 sind vier Sicherheitssteuerungen 10a-d, jeweils von der Art, wie sie in Zusammenhang mit den Figuren 1 und 10 erläutert wurde, zu einer Linienanordnung zusammengeschlossen. Es gibt ein einheitliches, globales Prozessabbild, das anlagenweit, also für sämtliche Sicherheitssteuerungen 10a-d, gültig ist. Dieses globale Prozessabbild ist den beteiligten Sicherheitssteuerungen 10a-d vorab bekannt. Mit dem globalen Prozessabbild werden beliebige Maschinen oder Anlagenteile projektiert und modular in jeweils einer Sicherheitssteuerung 10a-d verarbeitet. Dabei sind lokale Unterschiede von Sicherheitssteuerung 10a-d zu Sicherheitssteuerung 10a-d soweit zulässig, wie sie nicht die Kommunikation in der Linienanordnung betreffen, also das anlagenweite Übereinkommen, welche Bedeutung die kommunizierten Bits des globalen Prozessabbilds tragen.

Die als ein Repräsentant der Sicherheitssteuerungen 10a-d in Figur 2 gezeigte Sicherheitssteuerung 10 erhält jeweils in dem durch die oberen Pfeile angedeuteten Vorwärtskanal die globalen Prozessdaten vom Vorgänger und sendet, unverändert oder nach interner Verrechnung, die eigenen Prozessdaten an den Nachfolger. Entsprechend erhält die Sicherheitssteuerung 10 in dem durch die unteren Pfeile angedeuteten Rückwärtskanal die globalen Prozessdaten vom Nachfolger und sendet sie an den Vorgänger. Nicht sämtliche übertragenen Informationen müssen Prozessdaten sein, beispielsweise können auch Bits für Protokollinformationen, Checksummen oder dergleichen vorgesehen sein. Die Sicherheitssteuerung 10 wertet in ihrer eigenen Logik jeweils das aus der Linienanordnung empfangene einheitliche, globale Prozessabbild aus, verrechnet es mit eigenen lokalen Eingängen, steuert entsprechend die eigenen Ausgänge an und speist, soweit erforderlich, seine lokalen Informationen in das globale Prozessabbild ein, welches in der Linienanordnung schrittweise mit jedem Zyklus von Nachbar zu Nachbar kommuniziert wird.

Ein wichtiges Beispiel für eine nichtlokale, in der Linienanordnung zu kommunizierende Information ist ein Notaus, welche an einem Anlagenteil ausgelöst wird und die ganze Anlage stillsetzen soll. Die Information, ob dieser Notaus ausgelöst wird, wird vorab mit einem bestimmten Bit der kommunizierten Prozessdaten verknüpft, und darüber besteht Einigkeit zwischen allen Sicherheitssteuerungen 10a-d, die an einer Linienanordnung teilnehmen können. Jede Sicherheitssteuerung 10a-d verknüpft dann mit ihren Logikregeln nicht nur die Eingangssignale an den eigenen Eingängen 18, sondern auch die über die Linienanordnung empfangene Notaus-Information. Die NotausInformation kann in einer einzelnen Sicherheitssteuerung 10a-d sowohl ausgelöst, etwa weil an dem zugeordneten Anlagenteil ein Notaustaster gedrückt wurde, als auch in der Linienanordnung weitergegeben, also dem Nachfolger und/oder dem Vorgänger mitgeteilt werden. Somit genügt das eine mit dem Nothalt verknüpfte Bit, um sämtliche beteiligten Maschinen über den zugehörigen Nothaltschalter einer jeden Maschine stillzusetzen. Diese Kommunikation spart Ressourcen im Prozessabbild und ist unabhängig von der Anzahl der beteiligten Nothaltschalter beziehungsweise Maschinen. Sie ermöglicht ebenso einfach das Einfügen weiterer Sicherheitssteuerungen 10 zur Verarbeitung zusätzlicher Nothaltschalter und Maschinen wie eine reine Serienschaltung von einfachen Schaltern oder Relais.

An den Enden der Linienanordnung fehlt jeweils ein Vorgänger beziehungsweise ein Nachfolger. Entsprechend fehlen auch die Pfeile am Anfang und am Ende der Linienanordnung in Figur 3. In allen Sicherheitssteuerungen 10a-d sind vorab vordefinierte Prozessdaten in dem Speicherbereich 15 hinterlegt. Stellt eine Sicherheitssteuerung 10a-d fest, dass kein Vorgänger beziehungsweise kein Nachfolger angeschlossen ist, so werden diese vordefinierten Prozessdaten verwendet. Dadurch gibt es keine dedizierten Kopf- oder End-Sicherheitssteuerungen, sondern jede Sicherheitssteuerung 10a-d kann diese Rolle ohne Veränderung des Steuerungsprogramms dynamisch einnehmen.

Anhand der Figuren 4 bis 6 wird nachfolgend erläutert, wie Sicherheitssteuerungen 10a-e zu einer Linienanordnung verknüpft werden. Figur 4 zeigt zunächst eine beispielhaft fünf Sicherheitssteuerungen 10a-e umfassende Gruppe. Jede Sicherheitssteuerung 10a-e trägt in dem Beispiel noch eine Typbezeichnung, mit der festgelegt wird, welche Art von Maschine die Sicherheitssteuerung überwacht. Die Gruppe der Sicherheitssteuerungen 10a-e ist zunächst nicht verbunden und bildet noch keine Linienanordnung.

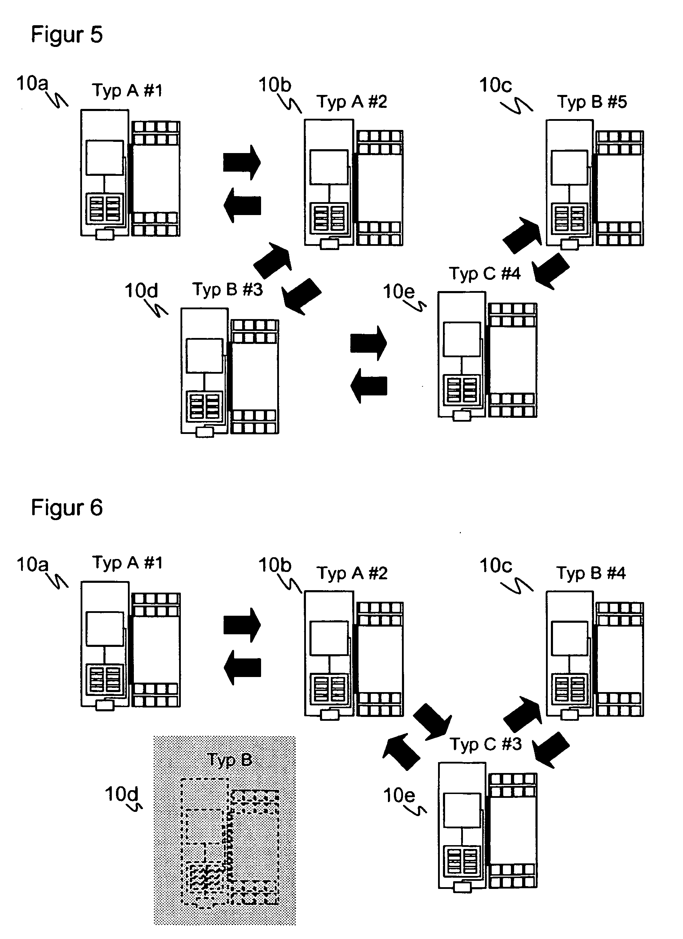

In der in Figur 5 gezeigten Konfiguration wurden die Sicherheitssteuerungen 10a, 10b, 10d, 10e, 10c in dieser Reihenfolge, die auch durch die Pfeile illustriert ist, zu einer Linienanordnung zusammengeschlossen. Für den Einsatz in sicherheitstechnischen Lösungen erfolgt daraufhin ein Bestätigungsmechanismus, dass die aktuelle Konfiguration gewollt ist. Dazu muss eine entsprechend qualifizierte und autorisierte Bedienperson, beispielsweise mit Hilfe eines Schlüssels, einer Elektronikkarte oder eines Passworts, eine Bestätigung geben. Dies löst ein Einlernsignal (Teach-Broadcast) an alle teilnehmenden Sicherheitssteuerungen 10a-e in der Linienanordnung aus, woraufhin sich die Sicherheitsteuerungen 10a-e miteinander bekannt machen und Adressen vergeben, die hier als #1-#5 in Reihenfolge der Linienanordnung gezeigt sind. Jede Sicherheitssteuerung 10a-e kennt danach ihren Vorgänger und Nachfolger. Fehlt ein Vorgänger oder ein Nachfolger, so ist die betreffende Sicherheitssteuerung 10a-e ein Ende der Linienanordnung und verwendet, wie oben beschrieben, die vordefinierten Prozessdaten aus dem Speicherbereich 15. Das Teach-Broadcast-Signal kann von einer beliebigen teilnehmenden Sicherheitssteuerung 10a-e ausgelöst sein.

In Figur 6 ist die Gruppe von Sicherheitssteuerungen 10a-e der Figur 4 zu einer anderen Linienanordnung zusammengeschlossen als in Figur 5. Dabei bilden die Sicherheitssteuerungen 10a, 10b, 10e, 10c in dieser Reihenfolge eine Linienanordnung, während die Sicherheitssteuerung 10d nicht angeschlossen und damit auch nicht Teil der Linienanordnung ist. Durch einfaches Ändern der Anschlüsse in der Linienanordnung erfolgt so eine Anpassung an eine Änderung der Anlage, bei welcher die der Sicherheitssteuerung 10d zugehörige Maschine entfernt oder deaktiviert ist. In analoger Weise lassen sich beliebige Linienanordnungen erstellen, um auf Änderungen in der Anlage zu reagieren.

Die Sicherheitssteuerungen 10a-e prüfen, ob alle Sicherheitssteuerungen 10a-e zu einer Linienanordnung gehören können, beispielsweise durch Austausch einer eindeutigen Verbund-Identifikationsnummer. So wird sichergestellt, dass die vordefinierten Prozessdaten und das globale Prozessabbild zueinander passen. Diese Prüfung findet in erster Linie beim Hochfahren der Anlage statt. Wird ein Teilnehmer aus einem anderen Verbund erkannt, etwa mit einer abweichenden Verbund-Identifikationsnummer, läuft das System nicht an.

Jede Sicherheitssteuerung 10a-e speichert ihren Vorgänger und Nachfolger, etwa nach einem Teach-Broadcast. Beim Hochlauf der Anlage werden die angeschlossenen Vorgänger und Nachfolger mit den gespeicherten verglichen. Wenn alle Sicherheitssteuerungen 10a-e ihre gespeicherten Vorgänger und Nachfolger vorfinden, kann die Anlage freigegeben werden.

Stellt eine Sicherheitssteuerung 10a-e eine Veränderung ihres Nachfolgers oder Vorgängers fest, also einen anderen Nachbarn, einen zusätzlichen Nachbarn oder einen fehlenden Nachbarn, gibt es dafür zwei denkbare Ursachen: Einen gezielten Umbau der Anlage oder einen Defekt. Ein gezielter Umbau wird durch ein Teach-Broadcast nach dem Bestätigungsmechanismus verarbeitet und führt zu einer neuen Linienanordnung. Bleibt die geforderte Bestätigung für den Teach-Broadcast aus, so wird die Freigabe verweigert.

Prozessinformationen in der Linienanordnung werden von Sicherheitssteuerung 10a-e zu Sicherheitssteuerung 10a-e in einer Punkt-zu-Punkt-Kommunikation weitergegeben. Dabei erhält beteiligte Sicherheitssteuerung lesenden und schreibenden Zugriff auf das globale Prozessabbild. Die Verbreitung der Information dauert allerdings mehrere Zyklen, wobei deren Anzahl von der Länge der Linienanordnung abhängt.

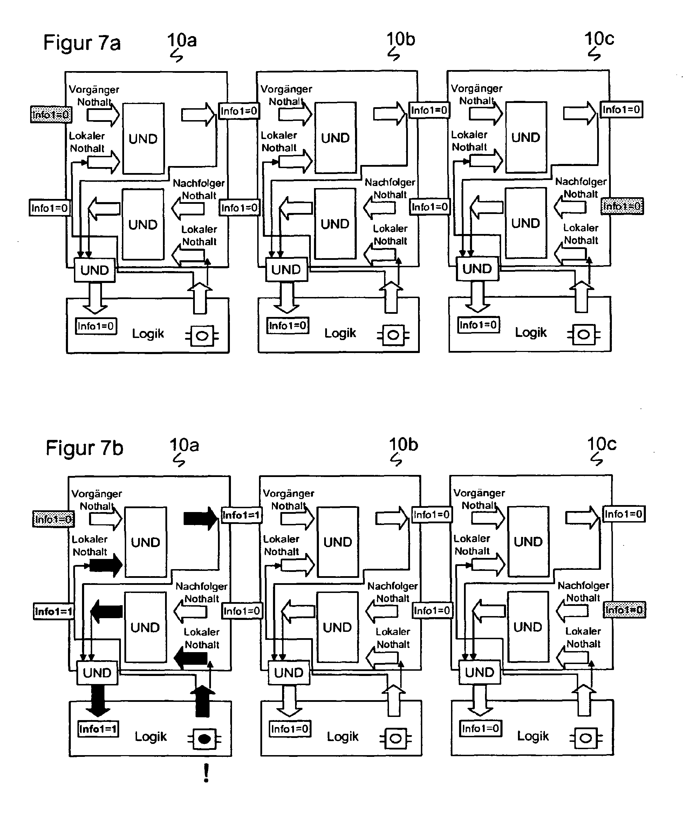

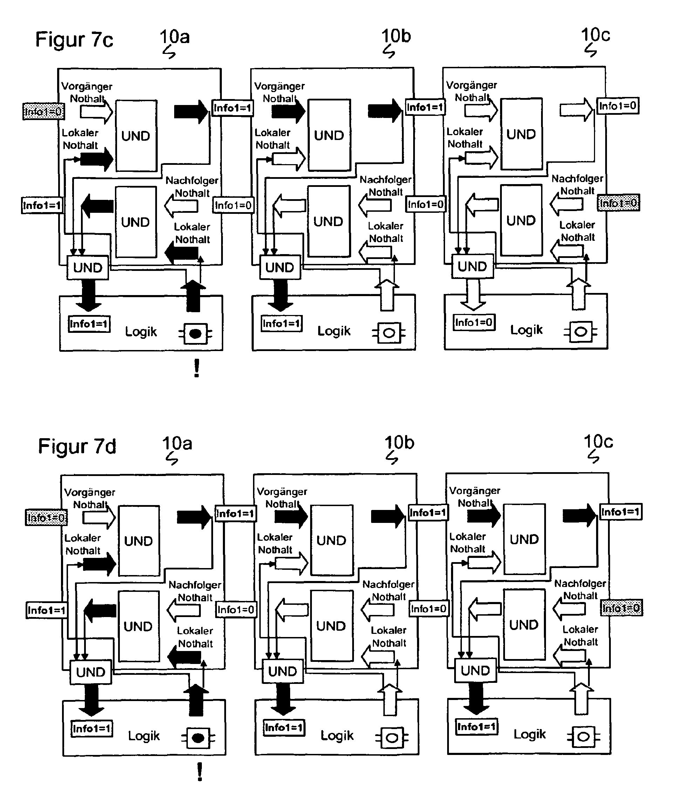

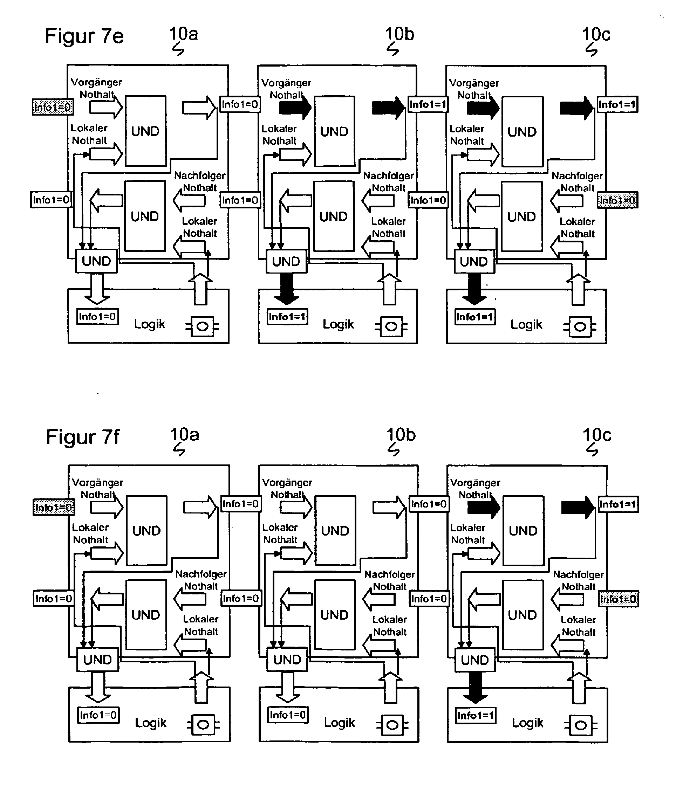

Figur 7 zeigt in den Figuren 7a-d beispielhaft die Weitergabe einer Information Info1, beispielsweise eines lokalen Nothalt-Signals an alle teilnehmenden Sicherheitssteuerungen 10a-c sowie in den Figuren 7e-f die anschließende Weitergabe, dass der lokale Nothalt nicht mehr aktiviert ist. Dabei zeigen Pfeile jeweils die Information, insbesondere das Informationsbit, ob der Nothalt aktiviert ist, wobei schwarze Pfeile für einen aktivierten und weiße Pfeile für einen nicht aktivierten Nothalt stehen. Zu beachten ist weiterhin, dass ein nicht aktivierter Nothalt in der Sicherheitstechnik durch eine logische Eins repräsentiert wird. Eine logische UND-Verknüpfung entspricht wegen dieser Invertierung dem intuitiv erwarteten ODER.

Im Ausgangszustand der Figur 7a ist weder gegenwärtig noch in den unmittelbar vorhergehenden Kommunikationszyklen an einer der Maschinen der Nothalt ausgelöst. Dementsprechend wird überall die Notausinformation auf Aus gesetzt, Info1=0.

In einem ersten Kommunikationszyklus gemäß Figur 7b wird, durch ein Ausrufungszeichen illustriert, ein Nothalt lokal in der Maschine ausgelöst, die von einer ersten Sicherheitssteuerung 10a überwacht wird. Die interne Logik in der Steuerungseinheit 14 sorgt dafür, dass der Nothalt an den eigenen Ausgängen 22 zu den vorgesehenen Abschaltungen führt. Die Information über den Nothalt wird außerdem für den Vorgänger und den Nachfolger auf dem für die Nothaltinformation Speicherbereich Info1, insbesondere dem dedizierten Bit des globalen Prozessabbilds bereitgestellt. Da kein Vorgänger angeschlossen ist, wird die Information in Rückwärtsrichtung nicht weiter verarbeitet.

In einem zweiten Kommunikationszyklus gemäß Figur 7c erhält die zweite Sicherheitssteuerung 10b als Nachfolgerin der Sicherheitssteuerung 10a das Nothaltsignal auf dem dedizierten Bit. Die interne Logik verarbeitet das Nothaltsignal, sorgt für die erforderlichen Abschaltbefehle und gibt es an die eigene Nachfolgerin aus. Ganz entsprechend ist das Verhalten in einem dritten Kommunikationszyklus gemäß Figur 7d, wobei die Information an die Nachfolgerin hier nicht mehr abgeholt wird, weil die Sicherheitssteuerung 10c das Ende der Linienanordnung bildet.

Sämtlichen beteiligten Sicherheitssteuerungen 10a-c ist damit die Information Info1=1 mitgeteilt, dass also irgendwo in der Linienanordnung ein lokaler Nothalt aktiv ist. Wird nach einiger Zeit der lokale Nothalt an der ersten Maschine wieder deaktiviert, so ergibt sich die Situation der Figur 7e. Die zugehörige Sicherheitssteuerung 10a setzt sowohl intern als auch für die Linienkommunikation die Nothaltinformation zurück, also Info 1=0.

Im nächsten Kommunikationszyklus gemäß Figur 7f nimmt die zweite Sicherheitssteuerung 10b diese Information auf, verarbeitet sie intern und gibt sie weiter. Im nächsten Kommunikationszyklus, der wieder der Figur 7a entspricht, wissen sämtliche beteiligten Sicherheitssteuerungen 10a-c, dass nun kein lokaler Nothalt mehr aktiv ist.

Der weiße Pfeil "Vorgänger Nothalt" in der Sicherheitssteuerung 10a und der weiße Pfeil "Nachfolger Nothalt" in der Sicherheitssteuerung 10c an den Enden der Linienanordnung repräsentiert keine Information der Kommunikation in der Linienanordnung, da es keinen Vorgänger beziehungsweise keinen Nachfolger gibt. Diese Information, nämlich dass die entsprechenden Nothaltsignale "Aus" sind, ist Bestandteil der schon mehrfach genannten vordefinierten Informationen oder des vordefinierten Default-Prozessabbilds, welches von Sicherheitssteuerungen 10a,c am Ende der Linienanordnung anstelle fehlender Nachbarn verwendet wird. Hier ist dementsprechend, grau hinterlegt dargestellt, Info1=0 gesetzt, damit nicht von den Enden der Linienanordnung ein nicht existenter Nothalt kommuniziert wird.

Ein Nothalt ist ein Beispiel für eine sicherheitskritische Information, die an jeder Maschine ausgelöst werden kann und die für alle Maschinen relevant ist. Letztlich wird ein logisches "ODER" gewünscht, in invertierte Codierung also ein "UND", weil das Auslösen eines Nothalts an einer einzigen Maschine in aller Regel genügt, um alle Maschinen der Anlage still zu setzen. Ein anderes Beispiel für eine sicherheitskritische Information ist ein Wiederanlauf (Restart) nach einer sicherheitsgerichteten Abschaltung. Hier ist ein logisches "UND" gewünscht, in invertierter Codierung "ODER", denn die Anlage kann nur erneut anlaufen, wenn an keiner Maschine noch ein kritischer Zustand vorliegt und deshalb alle Maschinen einem Wiederanlauf zustimmen. In diesem Fall wird an einer Maschine der Wiederanlauf ausgelöst und an die Nachbarn kommuniziert. Diese prüfen iterativ, ob sie selbst für einen Wiederanlauf bereit sind, und geben die Nachricht Schritt für Schritt bis ans Ende der Kette weiter, von wo die Nachricht dann im Erfolgsfall bestätigt zurückläuft und zum tatsächlichen Einschalten der Maschinen führt.

Das Beispiel der Figur 7 ist eine Information für alle teilnehmenden Sicherheitssteuerungen 10 in der Linienanordnung. Die Figuren 8a-d illustrieren diese und weitere Varianten der Informationsweitergabe, also einige verschiedene Kommunikationsmöglichkeiten in der Linienanordnung. Dabei stehen schwarze Pfeile für eine Verbindung, auf der bei der jeweiligen Kommunikationsmöglichkeit Information weitergegeben wird. Die beliebig herausgegriffene, dick umrandete Sicherheitssteuerung 10c ist der Ausgangspunkt der Kommunikation. Vorgesehen ist eine Information für den Nachfolger 10d gemäß Figur 8a, eine Information für den Vorgänger 10b gemäß Figur 8b, eine Information für beide Nachbarn gemäß Figur 8c und eine Information für die gesamte Anlage 10a-e gemäß Figur 8d.

Die Informationen müssen in allen Kommunikationsmöglichkeiten sicherheitstechnisch richtig verarbeitet werden. Dafür sind interne Logikregeln in den jeweiligen Steuerungseinheiten 14 implementiert, die in den Figuren 9a-d gezeigt sind. Jede Kommunikationsmöglichkeit zerfällt noch einmal in zwei Varianten, nämlich für normale Codierung ("Default Low") und für invertierte Codierung ("Default High"). In den Logikregeln wird dieser Unterschied im Wesentlichen durch Austausch von "UND"-Verknüpfungen durch "ODER"-Verknüpfungen berücksichtigt. Diese Logikregeln gelten jeweils für ein Bit des gemeinsamen globalen Prozessabbildes.

Figur 9a zeigt die Logikregeln für eine Information an den Nachfolger gemäß Figur 8a. Die Logikregel ist sehr einfach und umfasst lediglich eine Weiche. Es gibt hier auch keinen Unterschied in der Verarbeitung von normal und invertiert codierten Informationen. Ganz analog sind die Logikregeln der Figur 9b für eine Information an den Vorgänger gemäß Figur 8b.

Figur 9c zeigt die Logikregeln für eine Information an beide Nachbarn gemäß Figur 8c, wobei Figur 9c1 den Fall invertierter Codierung ("Default High") und Figur 9c2 den Fall normaler Codierung ("Default Low") darstellt. Bei dieser Kommunikationsmöglichkeit soll also eine Information vom Vorgänger oder vom Nachfolger, aber auch das entsprechende lokale Ereignis den lokalen Ausgang ansteuern. Das wird durch entsprechende paarweise UND-Verknüpfungen ("Default High") beziehungsweise ODER-Verknüpfungen ("Default Low") realisiert. Außerdem wird das lokale Ereignis mit einer Weiche an beide Nachbarn ausgegeben.

Figur 9d zeigt die Logikregeln für eine Information an die gesamte Anlage gemäß Figur 8d, wobei Figur 9d1 den Fall invertierter Codierung ("Default High") und Figur 9d2 den Fall normaler Codierung ("Default Low") darstellt. Bei dieser Kommunikationsmöglichkeit soll ebenfalls eine Information vom Vorgänger oder vom Nachfolger oder durch das entsprechende lokale Ereignis den lokalen Ausgang ansteuern, was erneut durch entsprechende paarweise UND-Verknüpfungen ("Default High") beziehungsweise ODER-Verknüpfungen ("Default Low") realisiert wird. Außerdem wird die Information des Vorgängers an den Nachfolger und die Information des Nachfolgers an den Vorgänger weitergegeben, um die anlagenweite Information in beiden Richtungen über die gesamte Linienanordnung zu verbreiten.

## Patentansprüche

1. Sicherheitssteuerung (10) zur sicherheitstechnischen Überwachung einer Anlage, wobei die Sicherheitssteuerung (10) mindestens einen Eingang (18) für den Anschluss eines Sensors (20), mindestens einen Ausgang (22) für den Anschluss eines Aktors (24), eine Kommunikationsschnittstelle (30) für den Anschluss einer vorgeordneten weiteren Sicherheitssteuerung (10a-d) und einer nachgeordneten weiteren Sicherheitssteuerung (10b-e) in Linienanordnung, um steuerungsrelevante Informationen auszutauschen, sowie eine Steuerungseinheit (14) aufweist, die dafür ausgebildet ist, ein Steuerungsprogramm auszuführen, welches anhand vorgebbarer Logikregeln an den Ausgängen (22) ein Steuerungssignal in Abhängigkeit von Eingangssignalen an den Eingängen (18) und/oder in Abhängigkeit von den steuerungsrelevanten Informationen erzeugt, wobei das Steuerungsprogramm autark innerhalb der Sicherheitssteuerung (10) arbeitet und Logikregeln aufweist, um die austauschbaren steuerungsrelevanten Informationen von einer vorgeordneten Sicherheitssteuerung (10a-d) und einer nachgeordneten Sicherheitssteuerung (10b-e) an der Kommunikationsschnittstelle (30) in einer Punkt-zu-Punkt-Kommunikation zu empfangen, intern zu verarbeiten und das Ergebnis der Verarbeitung an der Kommunikationsschnittstelle (30) für eine Punkt-zu-Punkt-Kommunikation an eine vorgeordnete Sicherheitssteuerung (10a-d) und eine nachgeordnete Sicherheitssteuerung (10b-e) bereitzustellen,
**dadurch gekennzeichnet,**
**dass** die austauschbaren steuerungsrelevanten Informationen zumindest Teile eines in der gesamten Linienanordnung gültigen, in der Sicherheitsteuerung (10) unabhängig von der Linienanordnung vordefinierten globalen Prozessabbilds der Sicherheitssteuerung (10) sind, wobei das Prozessabbild auch bei Anpassungen der Anlage nicht modifiziert wird, und somit die steuerungsrelevanten Informationen eine über die Linienanordnung globale, vorab und unabhängig von einer Kommunikation innerhalb der Linienanordnung in der Sicherheitssteuerung (10) definierte Bedeutung haben und das Steuerungsprogramm dafür ausgebildet ist zu vergleichen, ob alle Sicherheitssteuerungen (10a-e) der Linienanordnung sich über die Bedeutung der austauschbaren steuerungsrelevanten Informationen einig und auf dasselbe vordefinierte Prozessabbild synchronisiert sind.

2. Sicherheitssteuerung (10) nach Anspruch 1,
wobei die austauschbaren steuerungsrelevanten Informationen Sicherheitspfade betreffen, insbesondere Notaussignale oder Wiederanlaufsignale.

3. Sicherheitssteuerung (10) nach einem der vorhergehenden Ansprüche,
die einen Speicher (15) aufweist, in dem Werte für die steuerungsrelevanten Informationen abgelegt sind, insbesondere Werte für zumindest Teile des vordefinierten Prozessabbilds, wobei die Steuerungseinheit (14) dafür ausgebildet ist, die vordefinierten Informationen als die steuerungsrelevanten Informationen eines nicht angeschlossenen Vorgängers und/oder Nachfolgers zu verwenden.

4. Sicherheitssteuerung (10) nach einem der vorhergehenden Ansprüche,
wobei das Steuerungsprogramm jeweils einen Satz von Logikregeln aufweist, um steuerungsrelevante Informationen für die gesamte Linienanordnung zu erzeugen, zu verarbeiten und weiterzuleiten und/oder wobei das Steuerungsprogramm jeweils einen Satz von Logikregeln aufweist, um steuerungsrelevante Informationen nur für den Nachfolger und/oder den Vorgänger zu erzeugen, zu verarbeiten und weiterzuleiten.

5. Sicherheitssteuerung (10) nach Anspruch 4,
wobei das Steuerungsprogramm jeweils einen Satz von Logikregeln für Bits der steuerungsrelevanten Informationen aufweist, die normal und invertiert codiert sind.

6. Sicherheitssteuerung (10) nach einem der vorhergehenden Ansprüche,
wobei die Kommunikationsschnittstelle (30) für eine sichere Kommunikation ausgebildet ist.

7. Sicherheitssteuerung (10) nach einem der vorhergehenden Ansprüche,
die modular aufgebaut ist und mindestens ein Anschlussmodul (16a-d) mit dem mindestens einen Eingang (18) und/oder dem mindestens einen Ausgang (22) aufweist, wobei ein erstes Anschlussmodul (16a) an die Steuerungseinheit (14) und die weiteren Anschlussmodule (16b-d) an jeweils nur ein vorgeordnetes Anschlussmodul (16a-c) angeschlossen sind, so dass die Steuerungseinheit (14) mit den Anschlussmodulen (16a-d) eine Modulreihe bildet.

8. Sicherheitssteuerung (10) nach Anspruch 7,
wobei die Steuerungseinheit (14) ein Steuerungsmodul (12) bildet und sowohl die Anschlussmodule (16a-d) als auch Steuerungsmodul (12) in jeweils einem Gehäuse mit untereinander in zumindest einigen Dimensionen identischer Außengeometrie untergebracht sind, und wobei jedes Anschlussmodul (16a-d) eine Verbindung für ein vorgeordnetes Modul (12, 16a-c) und eine Verbindung für ein nachgeordnetes Modul (16a-d) der Modulreihe aufweist.

9. Linienanordnung mit mehreren Sicherheitssteuerungen (10a-e) nach einem der vorhergehenden Ansprüche, wobei jede Sicherheitssteuerung (10a-e) der Linienanordnung über die Kommunikationsschnittstelle (30) mit ihrem Vorgänger und mit ihrem Nachfolger verbunden ist, wobei die beiden Sicherheitssteuerungen an den Enden der Linienanordnung keinen Vorgänger oder keinen Nachfolger aufweisen.

10. Linienanordnung nach Anspruch 9,
wobei die Steuerungseinheiten (14) der Sicherheitssteuerungen (1 0a-e) dafür ausgebildet sind, ein Teach-Broadcast-Signal zu verarbeiten, so dass die Sicherheitssteuerungen (10a-e) sich bei Aktivierung der Linienanordnung miteinander bekannt machen, Adressen vergeben und feststellen, ob jeweils ein Vorgänger und/oder ein Nachfolger angeschlossen ist.

11. Linienanordnung nach Anspruch 9 oder 10, wenn rückbezogen auf Anspruch 3,
wobei die Steuerungsprogramme der einzelnen Sicherheitssteuerungen (10a-e) der Anordnung untereinander vergleichen, insbesondere bei Aktivierung der Sicherheitssteuerung (10a-e), ob in allen Sicherheitssteuerungen (10a-e) dieselben vordefinierten Informationen gespeichert sind.

12. Linienanordnung nach einem der Ansprüche 9 bis 11,
wobei die Steuerungsprogramme der einzelnen Sicherheitssteuerungen (10a-e) der Anordnung untereinander vergleichen, insbesondere bei Aktivierung der Sicherheitssteuerung (10a-e), ob die als Vorgänger und/oder Nachfolger angeschlossenen Sicherheitssteuerungen (10a-e) der Linienanordnung gespeicherten Sicherheitssteuerungen (10a-e) entsprechen.

13. Verfahren zum Aufbau oder Verändern einer Linienanordnung von Sicherheitssteuerungen (10a-e) nach einem der Ansprüche 1 bis 8, insbesondere einer Linienanordnung nach einem der Ansprüche 9 bis 12, wobei Sicherheitssteuerungen (10a-e) in einer gewünschten Reihenfolge linienförmig zusammengeschlossen, in ihrer Reihenfolge verändert und/oder Sicherheitssteuerungen (10a-e) entfernt oder hinzugefügt werden.

14. Verfahren nach Anspruch 13,
wobei die Steuerungsprogramme in den Sicherheitssteuerungen (10a-e) der Linienanordnung ein in den Sicherheitssteuerungen (10a-e) festgelegtes, einheitliches globales Prozessabbild verwenden und in jeder Sicherheitssteuerung (10a-e) vordefinierte Werte des Prozessabbildes gespeichert werden, welche die Steuerungseinheit (14) verwendet, wenn die Sicherheitssteuerung (10a-e) an einem Ende der Linienanordnung ohne Vorgänger oder ohne Nachfolger angeschlossen wird.

## Claims

1. A safety controller (10) for the safety technologically monitoring of a plant, the safety controller (10) having at least one input (18) for the connection of a sensor (20), at least one output (22) for the connection of an actuator (24), a communication interface (30) for the connection of a further safety controller (10a-d) arranged upstream and a further safety controller (10b-e) arranged downstream in a line arrangement in order to exchange control relevant information, as well as having a control unit (14) which is configured to execute a control program which generates a control signal at the outputs (22) in accordance with predeterminable logic rules in dependence on input signals at the inputs (18) and/or in dependence on the control relevant information, wherein the control program works in self-sufficient manner within the safety controller (10) and has logic rules to receive the exchangeable control relevant information from a safety controller (10a-d) arranged upstream and a safety controller (10b-e) arranged downstream at the communication interface (30) in a point to point communication, to internally process it and to provide the result of the processing at the communication interface (30) for a point to point communication at a safety controller (10a-d) arranged upstream and at a safety controller (10b-e) arranged downstream,
**characterized in that** the control relevant information is at least part of a pre-defined process image of the safety controller (10) defined independently of the line arrangement in the safety controller (10) and valid in the overall line arrangement, wherein the process image is also not modified when adapting the plant, so that the exchangeable control relevant information has a global meaning defined across the line arrangement in advance and independent of a communication within the line arrangement in the safety controller (10) and **in that** the control program is configured to compare whether all safety controllers (10a-e) of the line arrangement are in agreement with one another having regard to the exchangeable control relevant information and are synchronized to the same pre-defined process image.

2. A safety controller (10) in accordance with claim 1,
wherein the exchangeable control relevant information relate to safety paths, in particular to emergency shutdown signals or to restart signals.

3. A safety controller (10) in accordance with any one of the preceding claims which have a memory (15) in which values for the control relevant information is stored, in particular values for at least parts of the pre-defined process image, wherein the control unit (14) is configured to use the pre-defined information as the control relevant information of a non-connected predecessor and/or successor.

4. A safety controller (10) in accordance with any one of the preceding claims,
wherein the control program has a respective set of logic rules to generate control relevant information for the overall line arrangement, to process it and to forward it and/or wherein the control program has a respective set of logic rules to generate control relevant information only for the successor and/or for the predecessor, to process it and to forward it.

5. A safety controller (10) in accordance with claim 4,
wherein the control program has a respective set of logic rules for bits of the control relevant information which are coded normally and coded inverted.

6. A safety controller (10) in accordance with any one of the preceding claims,
wherein the communication interface (30) is configured for a secure communication.

7. A safety controller (10) in accordance with any one of the preceding claims which is designed modularly and has at least one connection module (16a-d) having the at least one input (18) and/or the at least one output (22), wherein a first connection module (16a) is connected to the control unit (14) and the further connection modules (16b-d) are each connected to only one upstream connection module (16a-c) so that the control unit (14) forms a module series with the connection modules (16a-d).

8. A safety controller (10) in accordance with claim 7,
wherein the control unit (14) forms a control module (12) and both the connections modules (16a-d) and the control module (12) are each arranged in a housing which among themselves have in at least some dimensions an identical outer geometry, and wherein each connection module (16a-d) has a connection for an upstream module (12, 16a-c) and a connection for a downstream module (16a-d) of the module series.

9. A line arrangement having a plurality of safety controllers (10a-e) in accordance with any one of the preceding claims, wherein each safety controller (10a-e) of the line arrangement is connected to its predecessor and to its successor via the communication interface (30), wherein the two safety controllers at the ends of the line arrangement do not have a predecessor or a successor.

10. A line arrangement in accordance with claim 9,
wherein the control unit (14) of the safety controllers (10a-e) is configured to process a Teach-Broadcast signal so that the safety controllers (10a-e) affiliate themselves with one another on activation of the line arrangement, assign addresses, and determine whether a predecessor and/or a successor is connected.

11. A line arrangement in accordance with claim 9 or claim 10, if referring to claim 3, wherein the control programs of the individual safety controllers (10a-e) of the arrangement compare with one another, in particular on activation of the safety controller (10a-e), whether the same pre-defined information is stored in all safety controllers (10a-e).

12. A line arrangement in accordance with any one of the claims 9 to 11,
wherein the control programs of the individual safety controllers (10a-e) compare the arrangement with one another, in particular on activation of the safety controllers (10a-e), whether the safety controllers (10a-e) connected to the line arrangement as predecessors and/or successors correspond to the stored safety controllers (10a-e).

13. A method for the set-up or the change of a line arrangement of safety controllers (10a-e) in accordance with any one of the claims 1 to 8, in particular a line arrangement in accordance with any one of the claims 9 to 12, wherein the safety controllers (10a-e) are connected line-wise in a desired sequence, are changed in there sequence and/or whether safety controllers (10a-e) are removed or added.

14. A method in accordance with claim 13,
wherein the control programs in the safety controllers (10a-e) of the line arrangement use a global process image pre-determined consistently in the safety controllers (10a-e), and in each safety controller (10a-e) pre-defined values of the process image are stored which are used in the control unit (14) when the safety controller (10a-e) is connected at one end of the line arrangement without a predecessor or a successor.

## Revendications

1. Commande de sécurité (10) pour la surveillance technologique de sécurité d'une installation, le commande de sécurité (10) ayant au moins une entrée (18) pour la connexion d'un capteur (20), au moins une sortie (22) pour la connexion d'un actionneur (24), une interface de communication (30) pour la connexion d'un commande de sécurité supplémentaire (10a-d) disposée en amont et une commande de sécurité supplémentaire (10b-e) disposée en aval dans un arrangement en ligne, pour échanger des informations pertinentes de commande, ainsi que comprenant une unité de commande (14) qui est configurée pour exécuter un programme de commande qui génère un signal de commande aux sorties (22) à l'aide des règles logiques prédéterminables dans la dépendance des signaux d'entrée aux entrées (18) et/ou dans la dépendance des l'informations pertinentes de commande, et le programme de commande fonctionne autarcique à l'intérieur de la commande de sécurité (10) et comprend des règles logiques pour recevoir les informations pertinentes de commande échangeables d'une commande de sécurité (10a-d) disposée en amont et d'une commande de sécurité (10b-e) disposée en aval à l'interface de communication (30) dans une communication point-à-point, pour transformer internement les informations et pour fournir le résultat de la transformation à l'interface de communication (30) pour une communication point-à-point à une commande de sécurité (10a-d) disposée en amont et à une commande de sécurité (10b-e) disposée en aval,
**caractérisé en ce que**
les informations pertinentes de commande échangeables sont au moins une part d'une image de processus globale du commande de sécurité (10), l'image de processus est valable dans toute l'arrangement en ligne et prédéfinie dans le commande de sécurité (10) indépendamment de l'arrangement en ligne, et l'image de processus également n'est pas modifiée lors de l'adaptation de l'installation, et par conséquent les informations pertinentes de commande ont une signification globalement dans l'arrangement en ligne, la signification est définie à l'avance et indépendamment d'une communication à l'intérieur de l'arrangement de ligne dans la commande de sécurité (10) et le programme de commande est configuré pour comparer si tous les commandes de sécurité (10a-e) de l'arrangement en ligne sont en accord sur la signification des informations pertinentes de commande échangeables et sont synchronisés à la même image de processus prédéfinie.

2. Commande de sécurité (10) selon la revendication 1, **caractérisé en ce que** les informations pertinents de commande échangeables concernent des chemins de sécurité, en particulier des signaux d'arrêt d'urgence ou des signaux de redémarrage.

3. Commande de sécurité (10) selon l'une des revendications précédentes, qui comprend une mémoire (15) dans laquelle des valeurs pour les informations pertinentes de commande sont stockées en particulier des valeurs pour au moins certaines parts de l'image de processus prédéfinies, où l'unité de commande (14) est configurée pour utiliser les informations prédéfinies comme les informations pertinentes de commande d'un prédécesseur et/ou d'un successeur nonconnectés.

4. Commande de sécurité (10) selon l'une des revendications précédentes, **caractérisé en ce que** le programme de commande comprend respectivement un ensemble de règles logiques pour générer des informations pertinentes de commande pour l'arrangement en ligne entier, pour les traiter et pour les transmettre et/ou **en ce que** le programme de commande comprend respectivement un ensemble de règles logiques pour générer des informations pertinentes de commande seulement pour le successeur et/ou pour le prédécesseur, pour les traiter et pour les transmettre.

5. Commande de sécurité (10) selon la revendication 4, **caractérisé en ce que** le programme de commande comprend respectivement un ensemble de règles logiques pour les bits d'informations pertinentes de commande, qui sont codés normalement et inversement.

6. Commande de sécurité (10) selon l'une des revendications précédentes, **caractérisé en ce que** l'interface de communication (30) est configurée pour une communication sécurisée.

7. Commande de sécurité (10) selon l'une des revendications précédentes, qui est assemblée de façon modulaire et comprend au moins un module de connexion (16a-d) ayant l'entrée (18) et/ou la sortie (22), et un premier module de connexion (16a) est connecté à l'unité de commande (14) et les autres modules de connexion (16b-d) sont chacun connectés à un seul module de connexion disposé en amont (16a-c) de sorte que l'unité de commande (14) forme une série de modules avec les modules de connexion (16a-d).

8. Commande de sécurité (10) selon la revendication 7, **caractérisé en ce que** l'unité de commande (14) forme un module de commande (12) et les modules de connexions (16a-d) et le module de commande (12) sont disposés chacun dans un boîtier, qui ont une géométrie extérieure identique entre eux au moins dans certaines dimensions, et **en ce que** chaque module de connexion (16a-d) comprend une connexion pour un module d'amont (12, 16a-c) et une connexion pour un module en aval (16a-d) de la série de modules.

9. Arrangement en ligne avec plusieurs commandes de sécurité (10a-e) selon l'une des revendications précédentes, **caractérisé en ce que** chaque commande de sécurité (10a-e) de l'arrangement en ligne est connectée à son prédécesseur et son successeur via l'interface de communication (30), et les deux commandes de sécurité aux extrémités de l'arrangement en ligne n'ont pas de prédécesseur ou de successeur.

10. Arrangement en ligne selon la revendication 9, **caractérisé en ce que** l'unité de commande (14) des commandes de sécurité (10a-e) est configurée pour traiter un signal de Teach-Broadcast de sorte que les commandes de sécurité (10a-e) se font connaître mutuellement à l'activation de l'arrangement en ligne, attribuent des adresses, et déterminent si un prédécesseur et/ou d'un successeur est connecté.

11. Arrangement en ligne selon la revendication 9 ou la revendication 10, si référant à la revendication 3, **caractérisé en ce que** les programmes de commande des commandes de sécurité individuelles (10a-e) de l'arrangement comparent mutuellement si les mêmes informations prédéfinis sont stockées dans toutes les commandes de sécurité (10a-e) en particulier à l'activation du commande de sécurité (10a -e).

12. Arrangement en ligne selon l'une des revendications 9 à 11, **caractérisé en ce que** les programmes de commande des commandes de sécurité individuelles (10a-e) de l'arrangement comparent mutuellement en particulier à l'activation des commandes de sécurité (10a-e) si les commandes de sécurité (10a-e) connectées comme prédécesseur et/ou successeur dans l'arrangement en ligne correspondent aux commandes de sécurité stockées (10a-e).

13. Procédé pour l'assemblage ou le changement d'un arrangement en ligne des commandes de la sécurité (10a-e) selon l'une des revendications 1 à 8, en particulier un arrangement en ligne selon l'une des revendications 9 à 12, **caractérisé en ce que** des commandes de sécurité (10a-e) sont connectées en ligne dans une séquence désirée, sont changées dans leurs séquence et/ou des commandes de sécurité (10a-e) sont enlevées ou ajoutées.

14. Procédé selon la revendication 13, **caractérisé en ce que** les programmes de commande dans les commandes de sécurité (10a-e) de l'arrangement en ligne utilisent une image de processus globale et unitaire et déterminée dans les commandes de sécurité (10a-e), et dans chaque commande de sécurité (10a-e) des valeurs prédéfinies de l'image du processus sont stockées et les valeurs sont utilisées par l'unité de commande (14) lorsque la commande de sécurité (10a-e) est connectée à une extrémité de l'arrangement en ligne sans un prédécesseur ou sans un successeur.
